# EUROPEAN PATENT SPECIFICATION

(11) **EP 1 845 237 B1**
(45) Date of publication and mention of the grant of the patent: **02.08.2017**
(21) Application number: 07251453.2
(22) Date of filing: 02.04.2007
(51) Int. Cl.: F01D 25/16, F01D 25/24

(54) **Mid-turbine frame**
Mittelturbinenrahmen
Cadre de turbine moyenne

(30) Priority: 04.04.2006 US 397157
(43) Date of publication of application: 17.10.2007
(73) Proprietor: United Technologies Corporation, Farmington, CT 06032 (US)
(72) Inventor: Kumar, Keshava B., South Windsor, CT 06074 (US); Sowa, William A., Simsbury, CT 06070 (US); Somanath, Nagendra, Manchester, CT 06042 (US)
(74) Representative: Leckey, David Herbert

(56) References cited:
- EP-A1- 1 316 676

## Description

### BACKGROUND OF THE INVENTION

The present invention generally relates to the field of gas turbine engines. In particular, the invention relates to a mid-turbine frame for a jet turbine engine.

Turbofans are a type of gas turbine engine commonly used in aircraft, such as jets. The turbofan generally includes a high and a low pressure compressor, a high and a low pressure turbine, a high pressure rotatable shaft, a low pressure rotatable shaft, a fan, and a combuster. The high-pressure compressor (HPC) is connected to the high pressure turbine (HPT) by the high pressure rotatable shaft, together acting as a high pressure system. Likewise, the low pressure compressor (LPC) is connected to the low pressure turbine (LPT) by the low pressure rotatable shaft, together acting as a low pressure system. The low pressure rotatable shaft is housed within the high pressure shaft and is connected to the fan such that the HPC, HPT, LPC, LPT, and high and low pressure shafts are coaxially aligned.

Outside air is drawn into the jet turbine engine by the fan and the HPC, which increases the pressure of the air drawn into the system. The high-pressure air then enters the combuster, which burns fuel and emits the exhaust gases. The HPT directly drives the HPC using the fuel by rotating the high pressure shaft. The LPT uses the exhaust generated in the combuster to turn the low pressure shaft, which powers the fan to continually bring air into the system. The air brought in by the fan bypasses the HPT and LPT and acts to increase the engine's thrust, driving the jet forward.

In order to support the high and low pressure systems, bearings are located within the jet turbine engine to help distribute the load created by the high and low pressure systems. The bearings are connected to a mid-turbine frame located between the HPT and the LPT by bearing support structures, for example, bearing cones. The mid-turbine frame acts to distribute the load on the bearing support structures by transferring the load from the bearing support structures to the engine casing. Decreasing the weight of the mid-turbine frame can significantly increase the efficiency of the jet turbine engine and the jet itself.

EP 1316676 discloses a mid-turbine frame according to the preamble of claim 1.

### BRIEF SUMMARY OF THE INVENTION

In accordance with the present invention there is provided a mid-turbine frame as set forth in claim 1.

### BRIEF DESCRIPTION OF THE DRAWINGS

FIG. 1 is a partial sectional view of a gas turbine engine having a mid-turbine frame.
FIG. 2 is a perspective view of the mid-turbine frame.
FIG. 3A is a cross-sectional view of a first embodiment of the med-turbine frame.
FIG. 3B is a schematic diagram of the first embodiment of the mid-turbine frame.
FIG. 4 is a free body diagram of the first embodiment of the mid-turbine frame.

### DETAILED DESCRIPTION

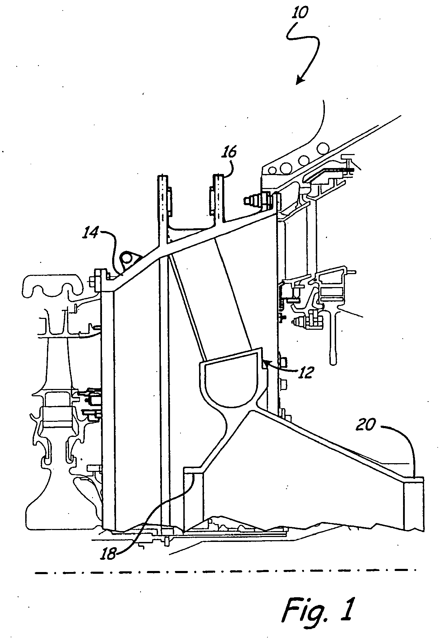

FIG. 1 shows a partial sectional view of an intermediate portion of gas turbine engine 10 about a gas turbine engine axis centerline. Gas turbine engine 10 generally includes mid-turbine frame 12, engine casing 14, mounts 16, first bearing 18, and second bearing 20. Mid-turbine frame 12 of gas turbine engine 10 has a lightweight design that transfers the loads from first and second bearings 18 and 20 to a single point load. The design of mid-turbine frame 12 is also capable of withstanding a large amount of load without deflecting, increasing its structural efficiency.

Mid-turbine frame 12 is housed within engine casing 14 of gas turbine engine 10. Mid-turbine frame 12 is connected to engine casing 14 and first and second bearings 18 and 20. Engine casing 14 protects mid-turbine frame 12 from its surroundings and transfers the loads from mid-turbine frame 12 to mounts 16. Mid-turbine frame 12 is designed to combine the loads from first and second bearings 18 and 20 to one point for a single point load transfer. Due to the design of mid-turbine frame 12, mid-turbine frame 12 has reduced weight. The weight of mid-turbine frame 12 will depend on the material used to form mid-turbine frame 12. In one embodiment, mid-turbine frame 12 has a weight of less than approximately 200 pounds (91 kg). For example, mid-turbine frame 12 formed of a Nickel-based alloy has a weight of approximately 175 pounds (80 kg). Mid-turbine frame 12 is also designed as a functional plenum and does not require an independent heat transfer plenum. In addition, mid-turbine frame 12 can be integrally cast as one piece with a cooling air redistribution device as an integral component.

First and second bearings 18 and 20 are located at forward and aft ends of gas turbine engine 10, respectively, below mid-turbine frame 12. First and second bearings 18 and 20 support thrust loads, vertical tension, side gyroscopic loads, as well as vibratory loads from high and low pressure rotors located in gas turbine engine 10. All of the loads supported by first and second bearings 18 and 20 are transferred to engine casing 14 and mounts 16 through mid-turbine frame 12. Second bearing 20 is typically designed to support a greater load than first bearing 18, so mid-turbine frame 12 is designed for stiffness and structural feasibility assuming that second bearing 20 is the extreme situation.

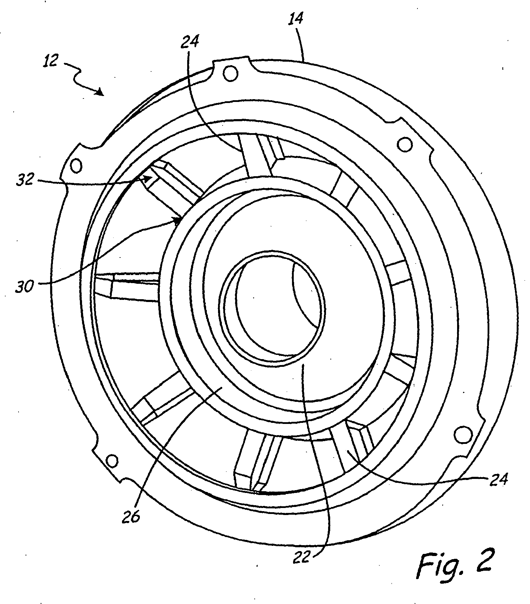

FIG. 2 shows an enlarged, perspective view of mid-turbine frame 12 within a cross-section of engine casing 14. Mid-turbine frame 12 generally includes torque box 22 and struts 24. First and second bearings 18 and 20 (shown in FIGS 1) are connected to mid-turbine frame 12 by first bearing cone 26 and second bearing cone 28 (shown in FIG. 1), respectively. First and second bearings cones 26 and 28 are continuously rotating with high and low pressure rotors and transfer the loads from first and second bearings 18 and 20 to mid-turbine frame 12.

Torque box 22 has a shell structure and is positioned between first and second bearing cones 26 and 28 and struts 24. Torque box 22 takes the loads, or torque, from first and second bearing cones 26 and 28 and combines them prior to transferring the loads to struts 24, which extend from along the circumference of torque box 22.

Struts 24 of mid-turbine frame 12 transfer the loads from first and second bearing cones 26 and 28 entering through torque box 22 to engine casing 14. Each of struts 24 has a first end 30 connected to torque box 22 and a second end 32 connected to engine casing 14. The loads travel from torque box 22 through struts 24 to engine casing 14. In one embodiment, struts 24 have an elliptical shape and are sized to take a load and transfer it in a vertical direction toward engine casing 14. In one embodiment, nine struts are positioned approximately forty degrees apart from one another along the circumference of torque box 22. In another embodiment, twelve total struts are positioned approximately thirty degrees apart from one another along the circumference of torque box 22.

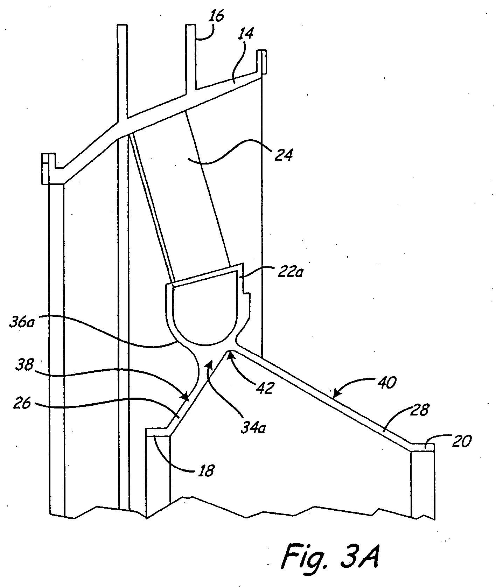

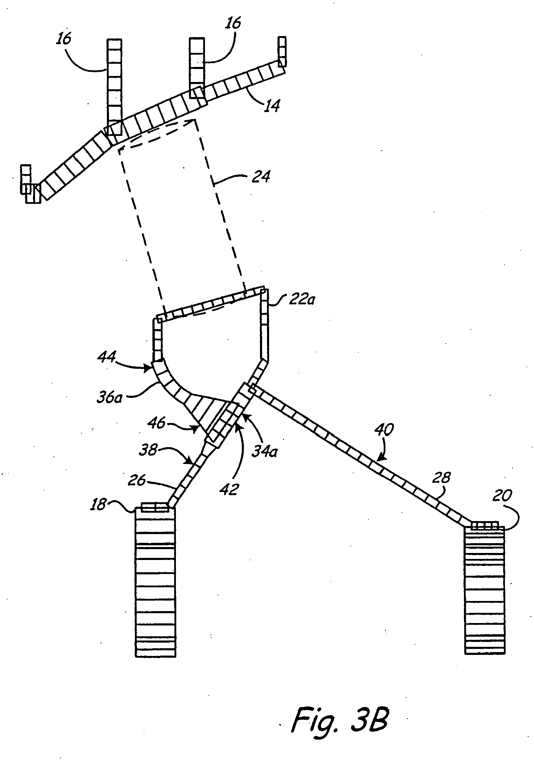

FIGS. 3A and 3B show a cross-sectional view and a schematic diagram of an embodiment of torque box 22a, respectively, and will be discussed in conjunction with one another. Torque box 22a is U-shaped and generally includes U-stem 34a and U-branch 36a. U-stem 34a of mid-turbine frame 12 has a first portion 38, a second portion 40, and a U-shaped center portion 42. U-stem 34a is positioned below torque box 22 and connects first and second bearing cones 26 and 28 to each other as well as to torque box 22a. First portion 38 of U-stem 34a extends from center portion 42 towards first bearing 18 and also functions as first bearing cone 26. Second portion 40 of U-stem 34a extends from center portion 42 towards second bearing 20 and also functions as second bearing cone 28. First and second bearing cones 26 and 28 are thus part of U-stem 34a and merge together at center portion 42. The loads of first and second bearing cones 26 and 28 are introduced into torque box 22a at center portion 42 U-stem 34a. Due to the shell shape of U-stem 34a, mid-turbine frame 12 can handle large loads at a time without deflecting. U-stem 34a also acts as a protective heat shield and provides thermal protection to torque box 22a.

U-branch 36a has a first end 44 and a second end 46. First end 44 of U-branch is connected to torque box 22a and second end 46 of U-branch 36a is connected to U-stem 34a at center portion 42 of U-stem 34a. By connecting U-branch 36a to center portion 42 of U-stem 34a, U-branch 36a can function as a bearing arm load transfer member.

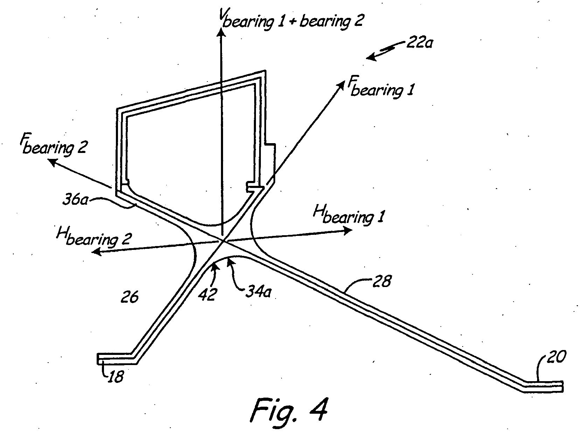

FIG. 4 is a free body diagram of torque box 22a connected to first and second bearings 18 and 20. The loads, or reaction forces, from first and second bearings 18 and 20 come through first and second bearing cones 26 and 28, F_{bearing1} and F_{bearing2}, respectively. Reaction forces F_{bearing1} and F_{bearing2} come in at an angle and intersect at U-stem 34a. The reaction forces are then broken up into simple vectors with horizontal components H_{bearing1} and H_{bearing2} and vertical components V_{bearing1} and V_{bearing2}. The horizontal components H_{bearing1} and H_{bearing2} come in at opposite directions and cancel each other out a center portion 42 of U-stem 34a. Because the horizontal components H_{bearing1} and H_{bearing2} cancel each other out, only the vertical components V_{bearing1+bearing2} are transferred through U-stem 34a and U-branch 36a to torque box 22a. The total load is thus reduced due to the absorptive components being cancelled at center portion 42 of U-stem 34a.

The torque box designs of the mid-turbine frame offer a lightweight structure with increased structural efficiency. The torque box has a single point transfer structure that delivers the loads from a first second bearing in the gas turbine engine. The single point transfer structure thus functions partly as a first and a second bearing cone. The loads from the first and second bearings combine at the single point transfer structure to a single load transfer point. Because the loads from the first and second bearings enter the single point transfer structure at an angle, the horizontal components of the loads cancel each other out. The only remaining force is in the vertical direction. The loads are combined and transferred to the torque box, which subsequently transfers the loads to a plurality of struts attached to the torque box. The struts are attached to an engine casing surrounding the mid-turbine frame, and delivers the load from the torque box to the engine casing. The single point transfer structure has a U-shape.

Although the present invention has been described with reference to preferred embodiments, workers skilled in the art will recognize that changes may be made in form and detail without departing from the scope of the invention.

## Claims

1. A mid-turbine frame (12) connected to at least one mount (16) of a gas turbine engine (10) for transferring a first load from a first bearing (18) and a second load from a second bearing (20) to the mount (16), the mid-turbine frame (12) comprising:
a single point load structure for combining the first load and the second load into a combined load; and
a plurality of struts (24) connected to the single point load structure for transferring the combined load from the single point load structure to the mount;
wherein the first load is transferred to the mid-turbine frame (12) through a first bearing cone (26) and the second load is transferred to the mid-turbine frame (12) through a second bearing cone (28);
**characterized in that** said single point load structure comprises:
a stem (34a) for combining the first and second load into the combined load;
a branch (36a) connected to the stem (34a) for absorbing a portion of the combined load from the stem (34a); and
a U-shaped torque box (22a) having a shell structure, said torque box (22a) having a first end and a second end, wherein the torque box is connected to the stem (34a) and the branch (36a) at the first end and connected to the plurality of struts (24) at the second end.

2. The mid-turbine frame of claim 1, wherein the torque box (22a) transfers the combined load from the stem (34a) and the branch (36a) to the plurality of struts (24).

3. The mid-turbine frame of claim 1 or 2, wherein first and second bearing cones (26, 28) are integrated with the stem (34a).

4. The mid-turbine frame of any of claims 1 to 3, wherein the stem (34a) provides thermal protection to the torque box (22a).

5. The mid-turbine frame of any preceding claim, wherein the branch (36a) functions as a bearing arm load transfer member.

6. The mid-turbine frame of any preceding claim, wherein the mid-turbine frame (12) has a weight of less than approximately 200 pounds (91 kg).

## Patentansprüche

1. Mittelturbinenrahmen (12), der mit wenigstens einer Halterung (16) eines Gasturbinentriebwerks (10) verbunden ist, um eine erste Last von einem ersten Lager (18) und eine zweite Last von einem zweiten Lager (20) auf die Halterung (16) zu übertragen, wobei der Mittelturbinenrahmen (12) Folgendes umfasst:
eine Einzelpunktlaststruktur zum Kombinieren der ersten Last und der zweiten Last zu einer kombinierten Last; und
eine Vielzahl von Streben (24), die mit der Einzelpunktlaststruktur verbunden ist, um die kombinierte Last von der Einzelpunktlaststruktur auf die Halterung zu übertragen;
wobei die erste Last durch einen ersten Lagerlaufring (26) auf den Mittelturbinenrahmen (12) übertragen wird und die zweite Last durch einen zweiten Lagerlaufring (28) auf den Mittelturbinenrahmen (12) übertragen wird;
**dadurch gekennzeichnet, dass** die Einzelpunktlaststruktur Folgendes umfasst:
einen Schaft (34a) zum Kombinieren der ersten und zweiten Last zu der kombinierten Last;
eine Verzweigung (36a), die mit dem Schaft (34a) verbunden ist, um einen Teil der kombinierten Last von dem Schaft (34a) zu absorbieren; und
ein U-förmiges Schubumkehrgehäuse (22a) mit einer Mantelstruktur, wobei das Schubumkehrgehäuse (22a) ein erstes Ende und ein zweites Ende aufweist, wobei der Schubumkehrkasten am ersten Ende mit dem Schaft (34a) und der Verzweigung (36a) verbunden ist und am zweiten Ende mit der Vielzahl von Streben (24) verbunden ist.

2. Mittelturbinenrahmen nach Anspruch 1, wobei das Schubumkehrgehäuse (22a) die kombinierte Last von dem Schaft (34a) und der Verzweigung (36a) auf die Vielzahl von Streben (24) überträgt.

3. Mittelturbinenrahmen nach Anspruch 1 oder 2, wobei der erste und zweite Lagerlaufring (26, 28) einstückig mit dem Schaft (34a) gebildet sind.

4. Mittelturbinenrahmen nach einem der Ansprüche 1 bis 3, wobei der Schaft (34a) Wärmeschutz für das Schubumkehrgehäuse (22a) bereitstellt.

5. Mittelturbinenrahmen nach einem der vorangehenden Ansprüche, wobei die Verzweigung (36a) als ein Lagerarmlastübertragunsglied dient.

6. Mittelturbinenrahmen nach einem der vorangehenden Ansprüche, wobei der Mittelturbinenrahmen (12) ein Gewicht von weniger als etwa 200 Pfund (91 kg) aufweist.

## Revendications

1. Cadre de turbine moyenne (12) relié à au moins un support (16) d'un moteur à turbine à gaz (10) afin de transférer une première charge depuis un premier palier (18) et une seconde charge depuis un second palier (20) vers le support (16), le cadre de turbine moyenne (12) comprenant :
une structure de charge à point unique pour combiner la première charge et la seconde charge en une charge combinée ;
et
une pluralité d'entretoises (24) reliées à la structure de charge à point unique pour transférer la charge combinée depuis la structure de charge à point unique vers le support ;
dans lequel la première charge est transférée vers le cadre de turbine moyenne (12) par l'intermédiaire d'un premier cône de roulement (26) et la seconde charge est transférée vers le cadre de turbine moyenne (12) par l'intermédiaire d'un second cône de roulement (28) ;
**caractérisé en ce que** ladite structure de charge à point unique comprend :
une tige (34a) pour combiner les première et seconde charges en la charge combinée ;
une branche (36a) reliée à la tige (34a) pour absorber une partie de la charge combinée depuis la tige (34a) ; et
un caisson de torsion en forme de U (22a) ayant une structure de coque, ledit caisson de torsion (22a) ayant une première extrémité et une seconde extrémité, dans lequel le caisson de torsion est relié à la tige (34a) et à la branche (36a) au niveau de la première extrémité et relié à la pluralité d'entretoises (24) au niveau de la seconde extrémité.

2. Cadre de turbine moyenne selon la revendication 1, dans lequel le caisson de torsion (22a) transfère la charge combinée depuis la tige (34a) et la branche (36a) vers la pluralité d'entretoises (24).

3. Cadre de turbine moyenne selon la revendication 1 ou 2, dans lequel les premier et second cônes de roulement (26, 28) sont intégrés à la tige (34a).

4. Cadre de turbine moyenne selon l'une quelconque des revendications 1 à 3, dans lequel la tige (34a) fournit une protection thermique au caisson de torsion (22a).

5. Cadre de turbine moyenne selon une quelconque revendication précédente, dans lequel la branche (36a) fonctionne comme un élément de transfert de charge à bras de support.

6. Cadre de turbine moyenne selon une quelconque revendication précédente, dans lequel le cadre de turbine moyenne (12) a un poids inférieur à environ 200 livres (91 kg).
